# FASCICULE DE BREVET EUROPEEN

(11) **EP 2 959 124 B1**
(45) Date de publication et mention de la délivrance du brevet: **17.07.2019**
(21) Numéro de dépôt: 14706905.8
(22) Date de dépôt: 07.02.2014
(51) Int. Cl.: F01N 3/20, F01N 3/28, F01N 5/02

(54) **DISPOSITIF DE TRAITEMENT DES GAZ D'ECHAPPEMENT PAR CATALYSE**
VORRICHTUNG ZUR BEHANDLUNG VON ABGASEN DURCH KATALYSE
DEVICE FOR TREATING EXHAUST GASES BY CATALYSIS

(30) Priorité: 21.02.2013 FR 1351504
(43) Date de publication de la demande: 30.12.2015
(73) Titulaire: Renault S.A.S., 92100 Boulogne-Billancourt (FR)
(72) Inventeur: MAZET, Valentin, F-75015 Paris (FR); COULET, Bertrand, F-91120 Palaiseau (FR); MOREAC-NJEIM, Gladys, F-91640 Fontenay Les Briis (FR)
(86) Numéro de dépôt international: PCT/FR2014/050232
(87) Numéro de publication internationale: WO 2014/147305

(56) Documents cités:
- WO-A1-01/57371
- DE-A1- 10 048 518
- DE-A1-102004 052 106

## Description

### Domaine technique

La présente invention se rapporte à un dispositif de traitement des gaz d'échappement par catalyse, dans lequel un matériau à changement de phase est intégré pour améliorer la rapidité de mise en fonction de la catalyse après un démarrage à chaud.

### Etat de la technique

Les systèmes de traitement des gaz d'échappement issus d'un moteur thermique pour les véhicules automobiles comportent fréquemment un dispositif de traitement à catalyse. Un substrat métallique ou céramique comporte des canaux revêtus de substances catalytiques. Les canaux sont parcourus par les gaz d'échappement et subissent une transformation chimique facilitée par la substance catalytique. Par exemple, les catalyseurs d'oxydation permettent de brûler les derniers résidus d'hydrocarbures contenus dans les gaz. Pour que les réactions d'oxydation aient lieu, il est nécessaire que le substrat soit à une température supérieure à un seuil prédéterminé, dite température d'amorçage, par exemple de l'ordre de 300 °C.

La mise en température du substrat est obtenue lors du démarrage du moteur par la chaleur contenue elle-même dans les gaz d'échappement. Par la suite, lorsque les réactions d'oxydation ont commencé, elles apportent de la chaleur par exothermie et maintiennent la température du substrat au-dessus du seuil.

Avec le développement des véhicules hybrides, comportant un moteur thermique et une autre source d'énergie, telle que de l'électricité sur batterie ou de l'air comprimé, le moteur thermique peut être fréquemment arrêté puis redémarré, ce qui n'assure plus le maintien en température du substrat du dispositif de traitement des gaz d'échappement. Le temps de montée en température peut même être inférieur à la durée de fonctionnement du moteur thermique de telle sorte que l'amorçage du dispositif à catalyse n'a pas lieu.

Une solution consiste à augmenter la quantité de substance catalytique sur le substrat, afin d'augmenter son efficacité. Cette solution est très coûteuse, puisqu'en général, les substances catatalytiques sont des métaux nobles tels que le platine, le palladium ou le rhodium.

Une autre solution consiste à modifier le mode de fonctionnement du moteur thermique pour augmenter fortement la température des gaz d'échappement et accélérer la montée en température du substrat. Cette solution comporte de nombreux inconvénients, en particulier celui d'augmenter fortement la consommation en carburant.

Il a été proposé dans le document WO 2011/009894 A1 un dispositif de traitement des gaz d'échappement comportant un substrat métallique de forme cylindrique et formé par l'enroulement d'un assemblage de feuilles métalliques dont au moins certaines sont ondulées. Les ondulations forment des canaux pour le passage des gaz. Certains des canaux sont remplis d'un matériau à changement de phase. La température de fusion est choisie pour être supérieure à la température d'amorçage, de telle sorte que lorsque le matériau à changement de phase est fondu, le substrat reste à une température supérieure à la température d'amorçage. Le démarrage des réactions catalytiques est alors immédiat.

Un tel dispositif n'est adapté qu'à un substrat métallique, et qu'à une structure particulière du dispositif. De plus, le remplissage individuel de chaque canal est difficile à réaliser puisqu'il doit être mené à une température supérieure à celle d'amorçage.

Le document DE102004052106A1 divulgue un dispositif de traitement des gaz d'échappement d'un véhicule comportant une entrée pour les gaz et une sortie, un substrat s'étendant dans une direction longitudinale et disposé entre l'entrée et la sortie, le substrat ayant des propriétés catalytiques, un matériau à changement de phase étant disposé à proximité du substrat. Le substrat est subdivisé en plusieurs parties espacées entre elles pour former un espace contenant le matériau à changement de phase.

L'invention vise à fournir un dispositif de traitement des gaz d'échappement dont le temps d'amorçage est optimisé et dont la structure est facile à réaliser.

### Description de l'invention

Avec ces objectifs en vue, l'invention a pour objet un dispositif de traitement des gaz d'échappement d'un véhicule comportant une entrée pour le gaz et une sortie, un substrat s'étendant dans une direction longitudinale et disposé entre l'entrée et la sortie, le substrat ayant des propriétés catalytiques, un matériau à changement de phase étant disposé à proximité du substrat, caractérisé en ce que le substrat est, le long d'au moins une première partie, subdivisé en au moins trois secteurs s'étendant dans la direction longitudinale et espacés entre eux, le matériau à changement de phase occupant l'espace entre les secteurs.

En réalisant le substrat en plusieurs secteurs on ménage facilement un espace entre eux qui peut être utilisé pour la mise en place du matériau à changement de phase. Celui-ci peut être coulé entre les secteurs en une seule opération, sans qu'il soit nécessaire que le substrat soit à température supérieure à la température d'amorçage. Le matériau à changement de phase est réparti dans les espaces entre secteurs et forme ainsi des branches, conférant ainsi une bonne surface d'échange thermique entre le matériau à changement de phase et le substrat.

Selon l'invention, le dispositif comporte un boîtier métallique contenant le matériau à changement de phase. Ainsi, même lorsqu'il est fondu, le matériau reste contenu dans le boîtier et ne se disperse pas. Compte tenu de la disposition des secteurs, un seul boîtier suffit pour contenir tout le matériau à changement de phase.

Le boîtier métallique a par exemple une section constante en forme d'étoile à autant de branches qu'il y a de secteurs.

De manière particulière, une première nappe est placée entre le boîtier et les secteurs. Cette première nappe fait fonction d'armortissement mécanique entre les secteurs et le boîtier. Elle permet d'éviter en particulier des bruits de frottement dus aux mouvements mécaniques ou thermiques. En choisissant son épaisseur et sa nature, on ajuste également la vitesse des échanges thermiques entre le matériau à changement de phase et les secteurs. Elle est par exemple constituée de fibre céramique.

Selon une disposition constructive, le dispositif comporte une enveloppe métallique formant un conduit pour les gaz d'échappement et contenant le substrat. On contient ainsi les gaz d'échappement et on protège le substrat.

De manière particulière, une deuxième nappe isolante est disposée entre l'enveloppe et le substrat. On assure ainsi une isolation thermique pour conserver la chaleur interne du substrat et limiter la température extérieure du dispositif. De plus, la nappe assure un calage du substrat dans l'enveloppe.

Selon une disposition particulière, le dispositif comporte en outre au moins une deuxième partie de section non subdivisée placée en amont ou en aval de la première partie. L'ajout d'un matériau à changement de phase sur l'ensemble du dispositif peut être pénalisant sur le délai d'amorçage à partir de la température ambiante, après un long arrêt. En subdivisant le substrat dans la direction longitudinale, on dispose de différentes parties dont l'une est moins inerte thermiquement, et peut donc monter en température plus rapidement. Lorsque celle-ci a atteint la température d'amorçage, une réaction exothermique s'initie et augmente la température du flux en aval. Le flux de gaz arrive sur la partie en aval, qui accumule alors de la chaleur par la fonte du matériau à changement de phase. A l'inverse, lorsque le moteur est arrêté depuis peu de temps, la partie sans matériau à changement de phase peut avoir une température inférieure à la température d'amorçage, tandis que la partie avec matériau à changement de phase est au-dessus. A la mise en route du moteur, le traitement des gaz d'échappement sur la partie avec matériau à changement de phase est immédiat.

Selon une disposition constructive, un intervalle est ménagé entre la première et la deuxième partie du substrat. Les gaz d'échappement peuvent ainsi se répartir entre les différents canaux des parties du substrat.

Selon un mode de réalisation particulier, le substrat est en céramique. Ce matériau se prête bien à la réalisation de secteurs. Les secteurs peuvent être tous identiques, ce qui permet de rationaliser leur fabrication. Cette matière se prête aussi à une mise en forme par extrusion, ce qui confère une forme de section sensiblement constante.

Le substrat est par exemple percé de canaux longitudinaux pour le passage des gaz.

### Brève description des figures

L'invention sera mieux comprise et d'autres particularités et avantages apparaîtront à la lecture de la description qui va suivre, la description faisant référence aux dessins annexés parmi lesquels :
--- la figure 1 est une vue en coupe transversale d'un dispositif conforme à un premier mode de réalisation de l'invention, selon la ligne I-I de la figure 2 ;
--- la figure 2 est une vue en coupe selon la ligne II-II de la figure 1 ;
--- la figure 3 est une vue similaire à la figure 1 selon un deuxième mode de réalisation de l'invention.

### DESCRIPTION DETAILLEE

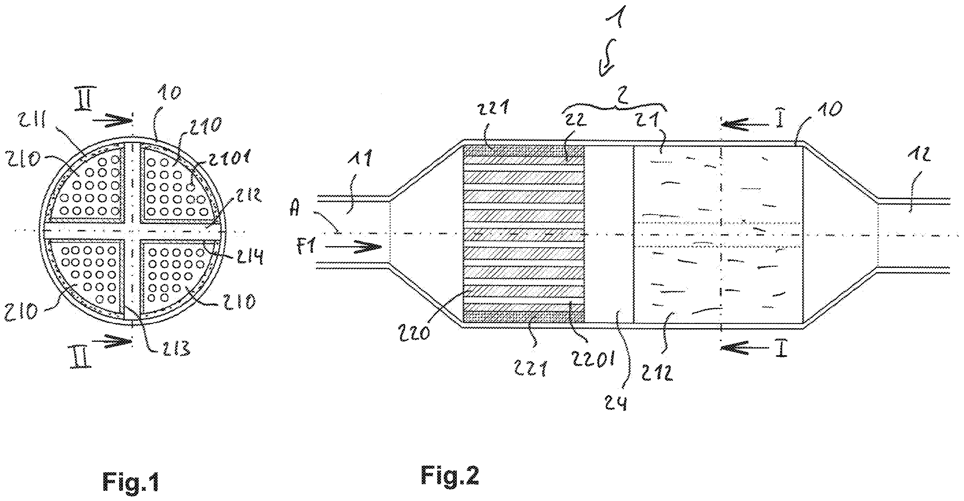

Selon un premier mode de réalisation de l'invention, montré sur les figures 1 et 2, un dispositif 1 de traitement des gaz d'échappement comporte une enveloppe 10 de forme cylindrique et s'étendant selon un axe principal A, une entrée 11 à une première extrémité de l'enveloppe 10 et une sortie 12 à l'extrémité opposée à celle de l'entrée 11. Les raccords entre l'entrée 11, la sortie 12 et l'enveloppe 10 sont de forme tronconique.

Le dispositif 1 comporte en outre un substrat 2 en deux parties séparées par un intervalle 24. Une première partie 21, située du côté de la sortie 12, comporte un matériau à changement de phase, tandis qu'une deuxième partie 22 est d'un seul tenant et est située du côté de l'entrée 11.

Comme le montre la figure 1, la première partie 21 est subdivisée en quatre secteurs 210 égaux, vus en section perpendiculaire à l'axe longitudinal. Les secteurs 210 sont réalisés en céramique et comportent des canaux 2101 dans lesquels les gaz d'échappement sont destinés à passer. L'intérieur des canaux 2101 est revêtu d'une substance catalytique, non représentée, classiquement utilisée pour cette application. Entre les secteurs 210, un espace 212 est ménagé en forme de croix et est occupé par un boîtier 213 métallique rempli d'un matériau à changement de phase. Le matériau à changement de phase est choisi pour avoir une température de fusion supérieure à la température d'amorçage de la substance catalytique. A température ambiante, le matériau à changement de phase est donc sous forme solide. Une première nappe 214 est interposée entre les secteurs 210 et le boîtier 213. Une deuxième nappe 211 isolante réfractaire est interposée entre les secteurs 210 et l'enveloppe 10. Les nappes 211, 214 sont réalisées par exemples en fibres céramiques.

La deuxième partie 22 du substrat 2 est formée d'un bloc 220 unique de céramique percé de canaux 2201 et maintenu centré dans l'enveloppe 10 par une troisème nappe isolante 221 réfractaire. Les canaux 2201 qu'il comporte sont également revêtus par une substance catalytique.

En fonctionnement, le dispositif 1 est traversé par les gaz d'échappement dans le sens indiqué par la flèche F1, en entrant par l'entrée 11. Les gaz traversent les canaux 2201 de la deuxième partie 22 du substrat, l'intervalle 24 puis les canaux 2101 de la première partie 21 et ressortent par la sortie 12. Après un long arrêt, le dispositif 1 est globalement à la température ambiante et le matériau à changement de phase est solidifié dans le boîtier 213. Au début du fonctionnement du moteur, les gaz qui traversent le dispositif 1 sont chauds et réchauffent progressivement d'abord la deuxième partie 22 du substrat 2. Lorsque celle-ci a atteint la température d'amorçage, une réaction exothermique s'initie et augmente la température du flux de gaz en aval. Le flux de gaz arrive sur la première partie 21, qui accumule alors de la chaleur en faisant fondre le matériau à changement de phase. Lorsqu'on arrête alors le moteur, la deuxième partie 22, sans matériau à changement de phase, se refroidit et atteint par exemple une température inférieure à la température d'amorçage. Pendant ce temps, la première partie 21 est maintenue à une température au-dessus de la température d'amorçage tant que l'ensemble du matériau à changement de phase ne s'est pas solidifié. Dans ces conditions, à une nouvelle mise en route du moteur, le traitement des gaz d'échappement sur la première partie 21 du substrat 2 est immédiat. On limite ainsi les périodes pendant lesquelles le dispositif 1 de traitement ne fonctionne pas.

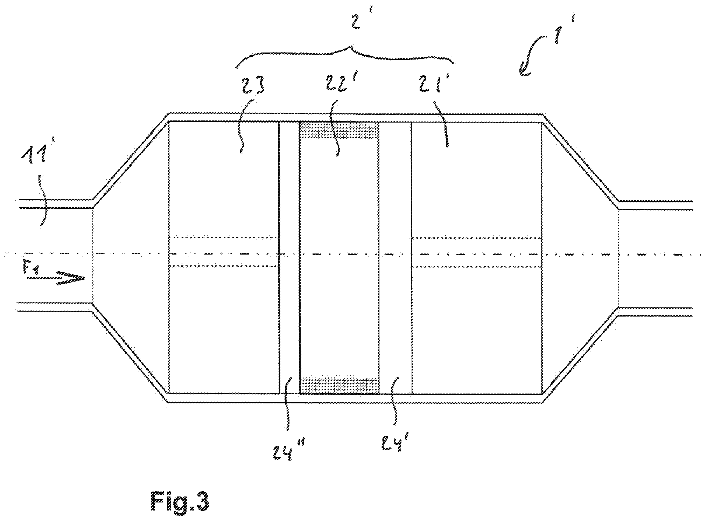

Selon un deuxième mode de réalisation, montré sur la figure 3, le dispositif 1' de traitement comporte en outre une troisième partie 23 de substrat, identique à la première partie 21' et placée du côté de l'entrée 11'. On trouve ainsi, dans le sens du flux des gaz, la troisième partie 23 avec un matériau à changement de phase, la deuxième partie 22' sans matériau à changement de phase et la première partie 21' avec matériau à changement de phase, avec des intervalles 24', 24" entre chaque partie.

L'invention n'est pas limitée aux modes de réalisation qui viennent d'être décrits à titre d'exemple, mais par les revendications attachées.

## Revendications

1. Dispositif de traitement des gaz d'échappement d'un véhicule comportant une entrée (11) pour le gaz et une sortie (12), un substrat (2) s'étendant dans une direction longitudinale et disposé entre l'entrée (11) et la sortie (12), le substrat (2) ayant des propriétés catalytiques, un matériau à changement de phase étant disposé à proximité du substrat (2), **caractérisé en ce que** le substrat (2) est disposé, le long d'au moins une première partie (21), subdivisé en au moins trois secteurs (210) s'étendant dans la direction longitudinale et espacés entre eux pour former un espace (212) dans lequel un seul boîtier (213) suffit pour contenir le matériau à changement de phase occupant l'espace (212) entre les secteurs (210).

2. Dispositif selon la revendication 1, **caractérisé en ce que** le boîtier contenant le matériau à changement de phase est métallique.

3. Dispositif selon la revendication 2, dans lequel le boîtier (213) métallique a une section constante en forme d'étoile à autant de branches qu'il y a de secteurs.

4. Dispositif selon la revendication 2 ou 3, dans lequel une première nappe (214) est placée entre le boîtier (213) et les secteurs (210).

5. Dispositif selon la revendication 1, **caractérisé en ce qu'**il comporte une enveloppe (10) métallique formant un conduit pour les gaz d'échappement et contenant le substrat (2).

6. Dispositif selon la revendication 5, dans lequel une deuxième nappe (211) est disposée entre l'enveloppe (10) et le substrat (2).

7. Dispositif selon l'une des revendications 1 à 6, **caractérisé en ce qu'**il comporte en outre au moins une deuxième partie (22) de section non subdivisée placée en amont ou en aval de la première partie (21).

8. Dispositif selon la revendication 7, dans lequel un intervalle (24) est ménagé entre la première et la deuxième partie (21, 22) du substrat.

9. Dispositif selon l'une des revendications 1 à 7, dans lequel le substrat (2) est en céramique.

10. Dispositif selon l'une des revendications 1 à 9, dans lequel le substrat (2) est percé de canaux (2101, 2201) longitudinaux pour le passage des gaz.

## Patentansprüche

1. Vorrichtung zur Behandlung der Abgase eines Fahrzeugs, welche einen Einlass (11) für das Gas und einen Auslass (12), ein Substrat (2), das sich in einer Längsrichtung erstreckt und zwischen dem Einlass (11) und dem Auslass (12) angeordnet ist, wobei das Substrat (2) katalytische Eigenschaften aufweist, und ein Phasenwechselmaterial, das in der Nähe des Substrats (2) angeordnet ist, umfasst, **dadurch gekennzeichnet, dass** das Substrat (2) entlang wenigstens eines ersten Teils (21) in wenigstens drei Sektoren (210) aufgeteilt angeordnet ist, die sich in der Längsrichtung erstrecken und voneinander beabstandet sind, um einen Raum (212) zu bilden, in welchem ein einziges Gehäuse (213) ausreichend ist, um das Phasenwechselmaterial einzuschließen, das den Raum (212) zwischen den Sektoren (210) einnimmt.

2. Vorrichtung nach Anspruch 1, **dadurch gekennzeichnet, dass** das Gehäuse, welches das Phasenwechselmaterial enthält, metallisch ist.

3. Vorrichtung nach Anspruch 2, wobei das metallische Gehäuse (213) einen konstanten Querschnitt in Form eines Sterns mit so vielen Strahlen, wie Sektoren vorhanden sind, aufweist.

4. Vorrichtung nach Anspruch 2 oder 3, wobei eine erste Matte (214) zwischen dem Gehäuse (213) und den Sektoren (210) angeordnet ist.

5. Vorrichtung nach Anspruch 1, **dadurch gekennzeichnet, dass** sie eine metallische Hülle (10) aufweist, die ein Leitungsrohr für die Abgase bildet und das Substrat (2) enthält.

6. Vorrichtung nach Anspruch 5, wobei eine zweite Matte (211) zwischen der Hülle (10) und dem Substrat (2) angeordnet ist.

7. Vorrichtung nach einem der Ansprüche 1 bis 6, **dadurch gekennzeichnet, dass** sie außerdem wenigstens einen zweiten Teil (22) mit einem nicht aufgeteilten Querschnitt aufweist, der stromaufwärts oder stromabwärts des ersten Teils (21) angeordnet ist.

8. Vorrichtung nach Anspruch 7, wobei ein Zwischenraum (24) zwischen dem ersten und dem zweiten Teil (21, 22) des Substrats ausgebildet ist.

9. Vorrichtung nach einem der Ansprüche 1 bis 7, wobei das Substrat (2) aus Keramik besteht.

10. Vorrichtung nach einem der Ansprüche 1 bis 9, wobei das Substrat (2) von Längskanälen (2101, 2201) für das Durchströmen der Gase durchbohrt ist.

## Claims

1. Device for treating the exhaust gases of a vehicle, comprising an inlet (11) for the gas and an outlet (12), a substrate (2) extending in a longitudinal direction and arranged between the inlet (11) and the outlet (12), the substrate (2) having catalytic properties, a phase-change material being arranged close to the substrate (2), **characterized in that** the substrate (2) is arranged, along at least one first part (21), divided into at least three sectors (210) extending in the longitudinal direction and spaced apart from one another so as to form a space (212) in which a single casing (213) suffices to contain the phase-change material occupying the space (212) between the sectors (210).

2. Device according to Claim 1, **characterized in that** the casing containing the phase-change material is made of metal.

3. Device according to Claim 2, in which the metal casing (213) has a constant cross section in the form of a star having as many arms as there are sectors.

4. Device according to Claim 2 or 3, in which a first ply (214) is placed between the casing (213) and the sectors (210).

5. Device according to Claim 1, **characterized in that** it comprises a metal envelope (10) forming a conduit for the exhaust gases and containing the substrate (2).

6. Device according to Claim 5, in which a second ply (211) is arranged between the envelope (10) and the substrate (2).

7. Device according to one of Claims 1 to 6, **characterized in that** it further comprises at least one second part (22) of non-subdivided cross section located upstream or downstream of the first part (21).

8. Device according to Claim 7, in which an interval (24) is created between the first and second part (21, 22) of the substrate.

9. Device according to one of Claims 1 to 7, in which the substrate (2) is made of ceramic.

10. Device according to one of Claims 1 to 9, in which the substrate (2) has, running through it, longitudinal channels (2101, 2201) for the gases to pass through.
